# EUROPÄISCHE PATENTSCHRIFT

(11) **EP 4 178 888 B1**
(45) Veröffentlichungstag und Bekanntmachung des Hinweises auf die Patenterteilung: **16.04.2025**
(21) Anmeldenummer: 21749541.5
(22) Anmeldetag: 13.07.2021
(51) Int. Cl.: A01D 17/10, B65G 17/06

(54) **VORRICHTUNG ZUR VEREINZELUNG UND FÖRDERUNG VON HACKFRÜCHTEN**
APPARATUS FOR SEPARATING AND CONVEYING ROOT CROPS
DISPOSITIF POUR SÉPARER ET TRANSPORTER DES PLANTES RACINES

(30) Priorität: 13.07.2020 DE 102020118423
(43) Veröffentlichungstag der Anmeldung: 17.05.2023
(73) Patentinhaber: Grimme Landmaschinenfabrik GmbH & Co. KG, 49401 Damme (DE)
(72) Erfinder: ROSS, Julian, 59889 Eslohe (DE); STROTHMANN, Wolfram, 49078 Osnabrück (DE)
(74) Vertreter: Wischmeyer, André
(86) Internationale Anmeldenummer: PCT/EP2021/069528
(87) Internationale Veröffentlichungsnummer: WO 2022/013255

(56) Entgegenhaltungen:
- EP-A1- 1 169 903
- DE-A1- 102017 124 170
- JP-A- H1 075 614
- JP-U- S5 730 210
- US-A- 3 679 050
- US-A- 4 281 764
- US-A1- 2004 050 029
- US-A1- 2009 057 107

## Beschreibung

Die Erfindung betrifft eine Vorrichtung zur Förderung von Hackfrüchten, umfassend eine im Betrieb in einer Umlaufrichtung umlaufende Tragvorrichtung. Die Tragvorrichtung bildet zumindest einen Aufnahmebereich mit aus und ist zum Tragen der Hackfrüchte eingerichtet. Die Vorrichtung umfasst außerdem zumindest eine sich zumindest anteilig in eine Querrichtung erstreckende Quertrenneinrichtung. Diese begrenzt den Aufnahmebereich in Umlaufrichtung. Der Aufnahmebereich grenzt von außen an einen Innenraum an, der sich innerhalb einer Innenraummantelfläche erstreckt. Die Innenraummantelfläche erstreckt sich parallel zur Querrichtung und verläuft in einer Seitenansicht ausschließlich in Umlaufrichtung. Zumindest ein abstehender Teil der Quertrenneinrichtung ist in der Seitenansicht außerhalb des Innenraums angeordnet.

Im Betrieb liegen Hackfrüchte auf der Tragvorrichtung auf und laufen abschnittsweise mit der Vorrichtung um. Die Quertrenneinrichtung bildet eine Barriere für die im Aufnahmebereich angeordnete, zumindest eine Hackfrucht und verhindert bzw. erschwert im Betrieb ein Austreten der Hackfrucht aus dem Aufnahmebereich. In der Querrichtung erstreckt sich der Aufnahmebereich regelmäßig zumindest im Wesentlichen über die volle Breite der Vorrichtung. Innerhalb des Aufnahmebereiches ist eine Bewegung der zumindest einen Hackfrucht möglich.

Nachteilig bei bekannten, gattungsgemäßen Vorrichtungen ist, dass im Betrieb eine Vielzahl von Hackfrüchten im selben Aufnahmebereich, die zu einer effektiven Anwendung der Vorrichtung zyklisch im Aufnahmebereich vorliegt, zu einer Anordnung der Hackfrüchte in mehreren Lagen auf der Tragvorrichtung führt. Insbesondere aufgrund von im Betrieb in der Regel auftretenden Neigungen der Vorrichtung konzentrieren sich die im Aufnahmebereich befindlichen Hackfrüchte in einem Teil dessen und liegen in diesem aufeinander, wohingegen ein anderer Teil des Aufnahmebereichs frei von Hackfrüchten ist. Dieses Phänomen erschwert die Sichtung bzw. Kontrolle der Hackfrüchte und das Auffinden von auszusortierenden Fremdkörpern.

In der US 3 679 050 A wird eine Vorrichtung offenbart, die die im Oberbegriff des Anspruchs 1 genannten Merkmale aufweist.

Aufgabe der vorliegenden Erfindung ist die Bereitstellung einer gattungsgemäßen Vorrichtung, die eine Sichtung bzw. Kontrolle von davon geförderten Hackfrüchten vereinfacht.

Die Aufgabe wird durch eine Vorrichtung nach Anspruch 1 gelöst.

Durch diesen Aufbau der Vorrichtung werden bei gleicher Breite der Vorrichtung in die Querrichtung mehr und jeweils schmalere Aufnahmebereiche geschaffen, die bei gleichbleibender Förderleistung jeweils eine geringere Zahl von Hackfrüchten aufnehmen. Insbesondere bei ansteigendem Verlauf der Vorrichtung oder bei Neigungen der Vorrichtung um eine zumindest anteilig zur Förderrichtung parallele Kippachse wird somit die Möglichkeit einer Anhäufung von Hackfrüchten auf der Tragvorrichtung durch eine Verlagerung derer in Querrichtung reduziert. Gegenüber einer Erhöhung der Anzahl von Quertrenneinrichtungen, durch welche sich eine Verlagerung von Erntegut in die Umlaufrichtung ggf. reduzieren lässt, wird zudem sichergestellt, dass auf einer Seite der Vorrichtung bzw. der Längstrenneinrichtung befindliche Hackfrüchte während des Umlaufs auf dieser Seite bleiben und an der entsprechenden Seite positioniertes Sichtungspersonal jedenfalls Zugriff auf diese Hackfrüchte bzw. etwaige darin befindliche Fremdkörper hat.

Die Vorrichtung ist umlaufend, d.h. in Umlaufrichtung geschlossen ausgebildet, wobei zwei in Umlaufrichtung miteinander verbundene, jeweilige Endbereiche mit komplementären Verbindungselementen insbesondere zur Demontage voneinander lösbar sind. Die Vorrichtung ist insbesondere als ein um eine zur Querrichtung parallele Biegeachse biegsames Band bzw. Förderband ausgebildet. Während des bestimmungsgemäßen Betriebes hat zumindest ein Teil der transportierten Hackfrüchte unmittelbaren Kontakt zur Tragvorrichtung. Im Betrieb erstreckt sich die Tragvorrichtung bevorzugt unterhalb der Hackfrüchte. Die Querrichtung ist eine zur Umlaufrichtung rechtwinklige Richtung, in der die Breite der Vorrichtung gemessen wird. Die Innenraummantelfläche ist eine gedachte Fläche und erstreckt sich in die Querrichtung insbesondere über die überwiegende oder volle Breite der Vorrichtung. In der Seitenansicht, die in die Querrichtung gerichtet ist, stellt sich die Innenraummantelfläche linienförmig dar. Bei gespanntem, d.h. in einer Seitenansicht betrachtet abschnittsweise geradlinigem Verlauf der Vorrichtung etwa zwischen zwei Umlenkrollen ist die Innenraummantelfläche in diesem jeweiligen Abschnitt eben. Die Aufnahmebereiche, in denen sich im Betrieb Hackfrüchte befinden, grenzen insofern an den Innenraum an, als sie die Innenraummantelfläche berühren, jedoch nicht schneiden. Insbesondere berühren die Aufnahmebereiche die Innenraummantelfläche punktförmig, linienförmig oder flächig.

In Umlaufrichtung und/oder in Querrichtung betrachtet weist die Vorrichtung bevorzugt zumindest drei, besonders bevorzugt zumindest fünf, insbesondere zumindest zehn Aufnahmebereiche nebeneinander auf. Diese schließen sich in Querrichtung bzw. in Umlaufrichtung aneinander an.

Bevorzugt ist zumindest einer der Aufnahmebereiche zumindest abschnittsweise, insbesondere vollständig, wannen- oder muldenförmig ausgebildet. Diese Form ist insbesondere nicht kontinuierlich, d.h. geschlossen ausgebildet, sondern durch entlang dieser Form angeordnete und von der Tragvorrichtung ausgebildete Stützpunkte. Der Aufnahmebereich ist dabei, ausgehend vom Innenraum, nach außen geöffnet ausgebildet. Durch diese Ausgestaltung des Aufnahmebereiches wird bereits innerhalb des Aufnahmebereiches einer Bewegung von darin befindlichen Hackfrüchten, insbesondere einem Verrollen innerhalb des Aufnahmebereiches, entgegengewirkt.

Die Längstrenneinrichtung ist insbesondere länglich ausgebildet. Vorzugsweise erstreckt sich die Längstrenneinrichtung angewinkelt zur Querrichtung, insbesondere in die Umlaufrichtung. Vorzugsweise weist die Vorrichtung mehrere, insbesondere zumindest fünf, bevorzugt zumindest zehn, besonders bevorzugt zumindest fünfzehn Längstrenneinrichtungen auf, die lokal in die Querrichtung voneinander beabstandet sind. Insbesondere verlaufen die Längstrenneinrichtungen in Umlaufrichtung. Durch diese Anzahl von Längstrenneinrichtungen und die sich in entsprechend hoher Zahl ergebenden Aufnahmebereiche haben letztere bei einer konventionellen Breite der Vorrichtung eine Breite, auf der nur eine, höchstens wenige Hackfrüchte in Umlaufrichtung betrachtet nebeneinander angeordnet sein können. Die Breite der Vorrichtung beträgt insbesondere 0,3 m bis 3 m, bevorzugt 0,5 m bis 2,5 m, vorzugsweise 0,9 m oder 2,4 m.

Bevorzugt beträgt der lokale Abstand zweier Längstrenneinrichtungen in Querrichtung zwischen 20 mm und 150 mm, besonders bevorzugt zwischen 30 mm und 80 mm, optimalerweise zwischen 40 mm und 60 mm. Durch die diesen Maßen entsprechende Breite des zwischenliegenden Aufnahmebereiches wird wiederum die Aufnahme von in Umlaufrichtung betrachtet nebeneinander liegenden Hackfrüchten innerhalb des Aufnahmebereiches bestmöglich verhindert.

Die Quertrenneinrichtung ist insbesondere länglich ausgebildet. Vorzugsweise erstreckt sich die Quertrenneinrichtung länglich in die Querrichtung, d.h. quer zur Umlaufrichtung. Alternativ erstreckt sich die Quertrenneinrichtung vorzugsweise sowohl angewinkelt zur Querrichtung als auch angewinkelt zur Umlaufrichtung, wobei die Erstreckungsrichtung der Quertrenneinrichtung mit der Querrichtung insbesondere einen Winkel einschließt, der weniger als 60°, bevorzugt 45° beträgt. Bevorzugt beträgt der Abstand zweier Quertrenneinrichtungen in Umlaufrichtung bzw. orthogonal zur Richtung ihrer länglichen Erstreckung zwischen 40 mm und 250 mm, besonders bevorzugt zwischen 70 mm und 130 mm, optimalerweise zwischen 90 mm und 110 mm. Aus der entsprechenden, in Umlaufrichtung bzw. quer zur Erstreckungsrichtung gemessenen Länge des von den beiden Quertrenneinrichtungen begrenzten Aufnahmebereiches ergibt sich, dass die Aufnahme von in Querrichtung betrachtet nebeneinander angeordneten Hackfrüchten innerhalb desselben Aufnahmebereiches bestmöglich vermieden wird. Vorzugsweise ist jeder Aufnahmebereich zur Aufnahme genau einer normalgroßen Hackfrucht ausgebildet, die sich im Betrieb möglichst mit ihrer Längsachse parallel zur Erstreckungsrichtung der Längstrenneinrichtung, alternativ zur Erstreckungsrichtung der Quertrenneinrichtung orientiert.

In einer bevorzugten Ausgestaltung der Erfindung ist sowohl die Erstreckungsrichtung der Quertrenneinrichtung als auch die Erstreckungsrichtung der Längstrenneinrichtung angewinkelt zum einen zur Querrichtung und zum anderen zur Umlaufrichtung orientiert. Insbesondere sind die Erstreckungsrichtungen jeweils um denselben Winkelbetrag, jedoch mit unterschiedlichen Vorzeichen relativ zur Umlaufrichtung angewinkelt. Bevorzugt sind beide Erstreckungsrichtungen um 30° bis 60°, insbesondere 45° gegenüber der Umlaufrichtung verschwenkt orientiert. In einer Draufsicht bilden die Quertrenneinrichtung und die Längstrenneinrichtung insbesondere ein Karomuster aus. Durch diese Ausbildung der Trenneinrichtungen lässt sich bei einem im Betrieb ansteigendem Verlauf der Vorrichtung eine automatische Zentrierung der in den Aufnahmebereichen angeordneten Hackfrüchten dadurch erreichen, dass diese schwerkraftbedingt in Richtung des tiefstgelegenen Knotenpunktes von den jeweiligen Aufnahmebereich umgrenzenden Trenneinrichtungen rollen. Hierdurch lassen sich maximale Abstände zwischen den Hackfrüchten und eine optimale Sichtbarkeit von Fehlstellen realisieren.

Die Quertrenneinrichtung und/oder die Längstrenneinrichtung erstrecken sich insofern in die angegebenen Richtungen, als sie in diese, in einer Draufsicht, bevorzugt gerade verlaufen. Die angegebenen Richtungen repräsentieren somit die Haupterstreckungsrichtung der jeweiligen Trenneinrichtung, ohne dass diese in die Haupterstreckungsrichtung durchgängig ausgebildet sein muss. Eine zumindest anteilige Erstreckung etwa in die Querrichtung meint, dass die Erstreckungsrichtung und die Querrichtung einen Winkel einschließen, der weniger als 90° beträgt.

In einer vorteilhaften Ausgestaltung der Erfindung ist die zumindest eine Längstrenneinrichtung derart ausgebildet, dass sie im Betrieb mit der Tragvorrichtung umläuft. Insbesondere ist die Längstrenneinrichtung mit der Tragvorrichtung kraft- oder formschlüssig verbunden und läuft im Betrieb mit der gleichen Umlauffrequenz wie die Tragvorrichtung um. Dazu ist die Längstrenneinrichtung insbesondere lösbar mit der Tragvorrichtung verbunden, vorzugsweise durch Schraub-, Rast- oder Klemmelemente. Bevorzugt ist die Längstrenneinrichtung durch Schekel oder Ösen geführt und dadurch an der Tragvorrichtung abgestützt.

Vorzugsweise ist die Längstrenneinrichtung einstückig mit der Tragvorrichtung ausgebildet. Insbesondere wird die an die Innenraummantelfläche grenzende Seite des Aufnahmebereiches durch einen dünneren Abschnitt eines Transportbandes ausgebildet, wohingegen die Längstrenneinrichtung durch einen benachbarten, dickeren und sich insbesondere weiter von der Innenraummantelfläche nach außen erstreckenden Abschnitt desselben Bandes ausgebildet wird. Dadurch wird bestmöglich eine Relativbewegung zwischen Tragvorrichtung und Längstrenneinrichtung, die eine Bewegung von im dadurch ausgebildeten Aufnahmebereich befindlichen Hackfrüchten erzeugt, verhindert.

Bevorzugt werden die Tragvorrichtung und die Längstrenneinrichtung durch zumindest einen profilierten Siebstab zumindest mitausgebildet. Der Siebstab hat dabei einen entlang seiner Mittellinie zumindest im Wesentlichen gleichbleibenden Querschnitt, ist insbesondere rotationssymmetrisch um die Mittellinie. Die Mittellinie hat einen nicht-geraden Verlauf. Insbesondere verläuft die Mittellinie in einer Ebene und/oder hat eine über die Länge des Siebstabes wiederkehrende Form, ist bevorzugt wellenförmig. Der zumindest eine Aufnahmebereich wird vorzugsweise durch eine Mehrzahl solcher Siebstäbe mitausgebildet, insbesondere wird die Längstrenneinrichtung ausschließlich durch den zumindest einen Siebstab ausgebildet. Durch diesen Aufbau lässt sich die Erfindung durch eine besonders geringe Zahl an Bauteilen realisieren, die im Bereich der Hackfruchterntetechnik seit langem zuverlässig eingesetzt wird.

Erfindungsgemäß ist die zumindest eine Quertrenneinrichtung und/oder die zumindest eine Längstrenneinrichtung durch eine Mehrzahl von entlang ihrer (Haupt-) Erstreckungsrichtung aufgereihten und sich in der Seitenansicht nach außen erstreckenden Trennelementen zumindest mitausgebildet, insbesondere ausgebildet. Diese Trennelemente sind insbesondere nicht unmittelbar miteinander verbunden. Bevorzugt ist ein Abstand zwischen benachbarten Trennelementen größer als eine Erstreckung der Trennelemente in die Querrichtung bzw. in die zur Querrichtung angewinkelte Richtung. Besonders bevorzugt erstrecken sich die Trennelemente von einer Trennelementwurzel, mit der sie an ein weiteres Bauteil angeordnet sind, in eine zur Innenraummantelfläche orthogonale Richtung bis zu einem oberen, insbesondere stumpfen Endbereich. Dabei sind die Trennelemente insbesondere zumindest überwiegend rotationssymmetrisch um eine zu dieser orthogonalen Richtung parallele Symmetrieachse ausgebildet und/oder fingerförmig. Insbesondere sind die Trennelemente aus einem Kunststoff oder Gummi hergestellt, insbesondere daraus um einen metallischen gegossen, und/oder elastisch verformbar. Die Trennelemente der Quertrenneinrichtung und die Trennelemente der Längstrenneinrichtung sind insbesondere einheitlich ausgebildet. Durch die Ausbildung der Trenneinrichtung(en) durch diese Trennelemente werden eine schonende Behandlung der Hackfrüchte sowie die Unabhängigkeit der Umgrenzungen unterschiedlicher Aufnahmebereiche sichergestellt.

Bevorzugt haben benachbarte Trennelemente einen Abstand von höchstens 40 mm, besonders bevorzugt von höchstens 30 mm, optimalerweise von höchstens 20 mm voneinander. Bevorzugt haben benachbarte Trennelemente zudem oder alternativ einen Abstand von mindestens 5 mm, besonders bevorzugt mindestens 10 mm, optimalerweise mindestens 15 mm voneinander. Durch diese Abstände wird ein optimaler Kompromiss zwischen schonender Behandlung der Hackfrüchte und bestmöglicher Abgrenzung der Aufnahmebereiche voneinander geschaffen. Vorzugsweise weist die Quertrenneinrichtung ein sich in deren (Haupt-) Erstreckungsrichtung und/oder in die Querrichtung erstreckendes Quertrennelement auf, das sich zumindest abschnittsweise außerhalb des Innenraumes länglich in die Querrichtung erstreckt und/oder an dem die Trennelemente angeordnet sind. Das Quertrennelement ist insbesondere ein vorzugsweise abgekröpfter Siebstab, an dem insbesondere die Trennelemente mit ihrer Trennelementwurzel angeordnet sind. Das Quertrennelement ist insbesondere starr, vorzugsweise aus Federstahl ausgebildet. Insbesondere sind zumindest eine Mehrzahl der Trennelemente einstückig mit einem Siebstabüberzug bzw. einem Siebstabaufsatz ausgebildet, welcher auf das Quertrennelement aufgeschoben oder aufgesetzt ist. Durch das Quertrennelement wird unmittelbar eine Trennwirkung in Umlaufrichtung insbesondere bei ansteigendem Vorrichtungsverlauf erreicht und/oder die Trennelemente zuverlässig gestützt.

Vorzugsweise erstrecken sich die Trennelemente um mindestens 15 mm, bevorzugt um mindestens 20 mm, besonders bevorzugt um mindestens 25 mm in eine zur Innenraummantelfläche rechtwinklige Richtung und insbesondere von der Innenraummantelfläche. Diese Ausmaße entsprechen der Höhe der Trennelemente von ihrer Trennelementwurzel bis zu ihrem vom Innenraum abgewandten Endbereich. Zwischen zwei benachbarten Trennelementen ist insbesondere ein Freiraum derselben Höhe gelassen. Insbesondere bei einer Ausbildung der Vorrichtung zur Förderung von Rüben beträgt die Höhe bis zu 150 mm. Durch diese Ausmaße der Trennelemente wird eine Trennung von unmittelbar auf der Tragvorrichtung aufliegenden Hackfrüchten zuverlässig sichergestellt und gleichzeitig eine Behinderung der gewünschten Verteilung der Hackfrüchte bei ihrer Aufgabe auf die Vorrichtung auf die unterschiedlichen Aufnahmebereiche, insbesondere des Übertretens der Trennelemente von in zweiter Lage auf der Tragvorrichtung aufliegenden Hackfrüchten ausgeschlossen.

Bevorzugt ist die Längstrenneinrichtung von einem Längstrennelement zumindest mitausgebildet, insbesondere ausschließlich ausgebildet, das mehrere in Umlaufrichtung benachbarte Aufnahmebereiche abgrenzt. Das Längstrennelement hat in Umlaufrichtung eine größere Erstreckung als ein davon abgegrenzter Aufnahmebereich. Insbesondere ist das Längstrennelement um die gesamte Tragvorrichtung umlaufend ausgebildet und/oder daran befestigt bzw. damit einstückig ausgebildet. Bevorzugt handelt es sich bei dem Längstrennelement um einen Riemen, welcher insbesondere einen runden Querschnitt mit einem bevorzugten Durchmesser von 12 mm hat. Durch diese Ausbildung ist die Längstrenneinrichtung im Betrieb besonders robust und erntegutschonend.

Vorzugsweise wird der Aufnahmebereich durch zumindest ein sich von der Innenraummantelfläche nach außen erstreckendes Formelement mitausgebildet. Das Formelement erstreckt sich rechtwinklig zur Innenraummantelfläche weniger weit als die Quertrenneinrichtung und/oder die Längstrenneinrichtung bzw. deren Trennelemente. Bevorzugt erstreckt sich das Formelement von der Innenraummantelfläche um 5 mm bis 20 mm, besonders bevorzugt um 10 mm bis 15 mm nach außen. Das Formelement ist insbesondere becherförmig ausgebildet. Alternativ ist das zumindest eine Formelement fingerförmig und vorzugsweise abgesehen von seiner Erstreckung bzw. Länge in gleicher Weise wie die Trennelemente ausgebildet und bildet einen Stützpunkt für eine im Aufnahmebereich angeordnete Hackfrucht. Durch das zumindest eine Formelement wird eine Form des Aufnahmebereichs erreicht, die ein Verrollen einer darin aufgenommenen Hackfrucht verhindert. Beispielsweise sind Form- und Trennelemente nach Art der bei Igelbändern üblichen abstehenden Profilelemente ausgebildet.

Das Formelement ist in Umlaufrichtung betrachtet vorzugsweise außermittig zwischen zwei in Querrichtung benachbarten Längstrenneinrichtungen angeordnet. Mittig zwischen den Längstrenneinrichtungen ist insbesondere kein Formelement angeordnet, so dass eine im Aufnahmebereich angeordnete Hackfrucht in dieser Zone unmittelbar auf der Tragvorrichtung aufliegen kann. Vorzugsweise ist sowohl benachbart zur einen der beiden Längstrenneinrichtungen als auch benachbart zur anderen der beiden Längstrenneinrichtungen zumindest ein Formelement angeordnet, um einen in Umlaufrichtung betrachteten mulden- oder wannenförmigen Querschnitt des Aufnahmebereichs auszubilden. Insbesondere sind benachbart zu den Längstrenneinrichtungen jeweils eine Mehrzahl von in Umlaufrichtung versetzten Formelementen angeordnet. Vorzugsweise sind in Umlaufrichtung betrachtet zwischen eine Längstrenneinrichtung und der Mitte des dadurch begrenzten Aufnahmebereiches mehrere insbesondere am selben Tragelement angeordnete Formelemente angeordnet. Diese haben bevorzugt eine mit ihrem Abstand zur nächstliegenden Längstrenneinrichtung abnehmende Länge, um den Querschnitt zur Hackfruchtschonung durch eine größere Zahl von Stützpunkten auszubilden.

Mit Vorteil weist die Tragvorrichtung in einer Weiterbildung einer erfindungsgemäßen Vorrichtung Ausnehmungen auf, die sich quer zur Innenraummantelfläche erstrecken. Es handelt sich bei der Vorrichtung erfindungsgemäß um ein Siebband. Dadurch können Beimengungen während der Förderung durch die Vorrichtung wirksam von den Hackfrüchten getrennt werden.

Vorzugsweise wird die Tragvorrichtung aus einer Mehrzahl insbesondere starrer und relativ zueinander beweglicher Tragelemente zumindest mitausgebildet.

Erfindungsgemäß weist die Tragvorrichtung eine Mehrzahl von in Querrichtung länglich verlaufenden Siebstäben auf, die in Umlaufrichtung benachbart und parallel zueinander angeordnet sind. Mit ihren Enden sind diese Siebstäbe erfindungsgemäß an seitlichen Endlosträgern wie z.B. Kunststoff- bzw. Gummiriemen angeordnet, welche zum Überlaufen von Umlenkrollen ausgebildet sind und im Betrieb angetrieben werden können. Bei diesem Aufbau und einer Ausbildung der Längstrenneinrichtung durch Trennelemente ist insbesondere an jedem Siebstab zumindest ein, insbesondere genau ein Trennelement angeordnet. Etwaige Formelemente sind bevorzugt ebenso unmittelbar an den Siebstäben angeordnet. Eine nach außen gewandte Oberseite der Siebstäbe bildet insbesondere den Aufnahmebereich mit aus. Bevorzugt sind die Siebstäbe innerhalb des Innenraumes angeordnet und grenzen an die Innenraummantelfläche.

Bevorzugt bilden je zwei Tragelemente, insbesondere Siebstäbe, eine einstückige Tragelementeinheit. Die Tragelemente sind insbesondere aus glasfaserverstärktem Kunststoff ausgebildet. Alternativ sind die Tragelemente als zueinander bewegliche Rostensegmente ausgebildet oder ist die Tragvorrichtung als Igelband ausgebildet, wobei der Endbereich des kürzesten Igel- bzw. Profilelementes bevorzugt in der Innenraummantelfläche liegt oder diese berührt.

Das Tragelement ist dabei insbesondere mittels jeweils zumindest einem, bevorzugt zwei, Befestigungsmittel wie einer Niete oder einer Schraube an zumindest zwei Endlosträgern befestigt. Die Endlosträger erstrecken sich insbesondere parallel zueinander und/oder sind elastisch und zumindest über einen überwiegenden Teil Ihres Umfangs zumindest im Wesentlichen einstückig und insbesondere homogen ausgebildet. Die Quertrenneinrichtung (14) und/oder die Längstrenneinrichtung (16) erstrecken/erstreckt sich zumindest teilweise derart im Bereich zumindest eines der Endlosträger (4), als eine zur Innenraummantelfläche (10) rechtwinklige, gedachte Hilfsgerade sowohl den Endlosträger (4) als auch die Quertrenneinrichtung (14) bzw. die Längstrenneinrichtung (16) schneidet. Die Hilfsgerade ist rechtwinklig sowohl zur Umlaufrichtung als auch zur Querrichtung. Die Quertrenneinrichtung und/oder die Längstrenneinrichtung erstrecken sich also insbesondere (bis) über zumindest einen der Endlosträger. Zumindest ein Teil der Aufnahmebereiche erstreckt sich bevorzugt zumindest teilweise oberhalb des Endlosträgers, sodass der Endlosträger zwischen einem Teil der Aufnahmebereiche und dem Innenraum angeordnet ist. Dadurch ist die zur Förderung nutzbare Fläche der Vorrichtung besonders groß.

Bevorzugt schneidet die Hilfsgerade sowohl den Endlosträger als auch zumindest ein Trennelement. Besonders bevorzugt schneidet die Hilfsgerade zusätzlich zumindest ein Tragelement und/oder ein Quertrennelement. Das Trennelement ist insbesondere an dem Tragelement oder dem Quertrennelement angeordnet. Vorzugsweise ist das Trennelement derart am Tragelement oder am Quertrennelement angeordnet, als das Trennelement aus einem Kunststoff ausgebildet ist, mit dem das Tragelement oder das Quertrennelement insbesondere vollständig umgossen ist. Bevorzugt schneidet eine zur Hilfsgerade parallele, weitere Gerade den Endlosträger und zumindest eines der Formelemente oder einen angrenzenden Aufnahmebereich. Somit sind die Aufnahmebereiche oberhalb der Endlosträger wie auch dazwischen auszubilden.

Die eingangs dargestellte Aufgabe wird weiterhin gelöst durch eine Vereinzelungsvorrichtung umfassend eine vor- oder nachfolgend beschriebene Vorrichtung, einen Vorrichtungsrahmen und zumindest zwei drehbar am Vorrichtungsrahmen angeordnete Umlenkelemente. Insbesondere umfasst die Vereinzelungsvorrichtung einen Antrieb, bevorzugt ist eines der Umlenkelemente als Antriebselement zur Übertragung eines Drehmomentes ausgebildet. Die Umlenkelemente sind derart zur Führung der Vorrichtung eingerichtet, dass zumindest ein Förderabschnitt der Vorrichtung zumindest abschnittsweise eine Steigung aufweist. Damit verläuft die Vorrichtung im Förderabschnitt zumindest anteilig aufwärts. Alternativ weist der Förderabschnitt zumindest abschnittsweise ein Gefälle auf, womit die Vorrichtung im Förderabschnitt zumindest anteilig abwärts verläuft. Insbesondere sind die Umlenkelemente Umlenkrollen, die drehbar am Vorrichtungsrahmen gelagert sind. Durch die Steigung bzw. das Gefälle wird die beabsichtigte Anordnung möglichst weniger Hackfrüchte pro Aufnahmebereich erleichtert, da in zweiter Lage in einem Aufnahmebereich befindliche Hackfrüchte schwerkraftbedingt in einen benachbarten, insbesondere nachfolgenden, Aufnahmebereich rollen bzw. rutschen. Alternativ zur vorbeschriebenen Ausbildung des Förderabschnittes hat zumindest ein Fördertrum der Vorrichtung für Sonderanwendungsfälle der Vereinzelungsvorrichtung einen zumindest im Wesentlichen horizontalen Verlauf.

Bevorzugt weist ein erster Förderabschnitt der Vorrichtung eine größere Steigung bzw. ein größeres Gefälle auf als ein sich in Umlaufrichtung anschließender, zweiter Förderabschnitt. Insbesondere überläuft die Vorrichtung im Betrieb zwischen den beiden Förderabschnitten ein Umlenkelement. Der zweite Förderabschnitt verläuft insbesondere zumindest im Wesentlichen horizontal. Nachdem der Vorteil eines steigenden Verlaufs der Vorrichtung erläutert wurde, ist der Vorteil des sich anschließenden, weniger steilen bzw. horizontalen Verlaufs, dass sich in diesem eine Relativbewegung von in den Aufnahmebereichen befindlichen Hackfrüchten zur Vorrichtung verringern. Je weniger sich die Hackfrüchte auf der Vorrichtung bewegen, desto leichter fällt ihre Kontrolle. Der Förderabschnitt bzw. die Förderabschnitte ist/sind dabei nicht mit der Vorrichtung umlaufend, sondern relativ zum Vorrichtungsrahmen ortsfeste Abschnitte, innerhalb derer durch die Vorrichtung eine übereinstimmende Funktion, z.B. eine Beruhigung der Bewegung der Hackfrüchte, wahrgenommen wird.

Vorzugsweise hat die Vereinzelungsvorrichtung zumindest ein im Betrieb nicht-umlaufendes, unterhalb zumindest eines Teils des Förderabschnitts bzw. einer der Förderabschnitte angeordnetes Gleitelement. Das Gleitelement ist insbesondere unterhalb des zweiten Förderabschnitts angeordnet. Vorzugsweise ist das Gleitelement eine Gleitschiene, über die die Vorrichtung insbesondere zwischen zwei Umlenkelementen im Betrieb gleitet und die somit ein Durchhängen der Vorrichtung verhindert. Bevorzugt hat die Vereinzelungsvorrichtung eine Mehrzahl von in Querrichtung voneinander beabstandeten Gleitelementen. Das zumindest eine Gleitelement verhindert oder verringert zumindest die Einleitung von Impulsen auf die Hackfrüchte, welche eine Bewegung derer auslösen könnten.

Gemäß einer weiteren Ausbildung der Erfindung weist die Vereinzelungsvorrichtung zumindest ein im Betrieb bewegliches, insbesondere rotierendes, Stoßelement auf. Das Stoßelement ist zur Erzeugung von Stößen auf zumindest einen Teil des Förderabschnitts bzw. einer der Förderabschnitte, ausgebildet. Insbesondere ist das Stoßelement unterhalb des im Betrieb steigenden, ersten Förderabschnitts angeordnet. Im Betrieb erzeugt das Stoßelement Kraftimpulse auf die Vorrichtung, welche vorzugsweise nicht in Umlaufrichtung gerichtet sind. Dadurch wird die Vorrichtung insbesondere im ersten Förderabschnitt geschüttelt, wodurch eine gleichmäßige Verteilung der Hackfrüchte auf die Aufnahmebereiche erzeugt wird. Im Einzelnen ist das Stoßelement bevorzugt als im Betrieb rotierendes Element mit einer exzentrischen Außenkontur ausgebildet. Alternativ und insbesondere im Falle einer profilierten Unterseite der Vorrichtung bzw. eines im Betrieb über das Stoßelement verlaufenden Endlosträgers ist das Stoßelement als im Betrieb rotierendes und zumindest im Wesentlichen rotationssymmetrisches Element, d.h. vorzugsweise als Rolle ausgebildet. Im Betrieb ist die Funktion des zumindest einen Stoßelementes insbesondere automatisiert. Bevorzugt hängt im Betrieb zumindest ein Betriebsparameter des Stoßelementes, insbesondere dessen Drehzahl oder dessen Radius, von einer Einstellung eines Anwenders und/oder von vorzugsweise ursprünglich durch zumindest einen optischen Sensor an der Vorrichtung oder an einer der nachbeschriebenen Maschinen aufgenommenen Daten betreffend das Fördergut, insbesondere einem Fremdkörperanteil im Fördergut, bzw. die Hackfrüchte ab.

Oberhalb des Förderabschnitts bzw. eines der Förderabschnitte, insbesondere des ersten Förderabschnitts, ist insbesondere ein Abstreifelement angeordnet, das höchstens 20 cm, bevorzugt höchstens 15 cm von der Innenraummantelfläche beabstandet ist und dessen Umfangsfläche im Betrieb in einer Seitenansicht insbesondere an die Formelemente angrenzt. Besonders bevorzugt ist das Abstreifelement drehbar um eine insbesondere parallel zur Querrichtung orientierte Drehachse gelagert. Vorzugsweise handelt es sich bei dem Abstreifelement um eine elastisch verformbare Rolle, insbesondere aus Schaumstoff. Alternativ ist das Abstreifelement als Rückhaltegummi oder Bürste ausgebildet. Das Abstreifelement dient dazu, in zweiter Lage auf dem Tragelement aufliegende oder zurückrollende Hackfrüchte in oder entgegen der Umlaufrichtung aufzuhalten und in nachfolgende, freie Aufnahmebereiche umzuverlagern.

Weiterhin wird die Aufgabe gelöst durch eine mobile Hackfruchterntemaschine mit einer vorbeschriebenen Vereinzelungsvorrichtung. Auch wird die Aufgabe gelöst durch eine mobile oder stationäre Transport- oder Reinigungsmaschine mit einer vorbeschriebenen Vereinzelungsvorrichtung. Oberhalb des ersten Förderabschnitts ist insbesondere eine Zufördereinrichtung zur Aufbringung von Hackfrüchten auf die Vorrichtung angeordnet. Außerdem bildet die Vereinzelungsvorrichtung mit einer in Gutstromrichtung auf die Vorrichtung folgenden Fördereinrichtung bevorzugt eine Fallstufe aus, an der vorzugsweise ein Trenngerät angeordnet ist. Das Trenngerät umfasst insbesondere eine Mehrzahl von in die Querrichtung versetzt angeordneten Ablenkelementen, die zumindest der Anzahl von in Querrichtung nacheinander angeordneten Aufnahmebereichen entspricht. Die Ablenkelemente sind von einer Ablenkstellung, in der sie eine aus einem zugeordneten Aufnahmebereich ausgegebene Hackfrucht so ablenken, dass sie nicht die folgende Fördereinrichtung erreicht, in eine Ausgangsstellung, in der sie außerhalb des Gutstroms angeordnet sind, und zurück beweglich. Insbesondere werden die Ablenkelemente in Abhängigkeit von den Informationen zumindest eines über dem (zweiten) Förderabschnitt angeordneten Sensors, insbesondere einer Kamera, angesteuert, die abzulenkende Hackfrüchte bzw. Fremdkörper optisch erkennt.

Weitere Einzelheiten und Vorteile der Erfindung sind den nachfolgend beschriebenen, schematisch dargestellten Ausführungsbeispielen zu entnehmen; es zeigen:
- Fig. 1: eine perspektivische Darstellung eines Abschnittes einer ersten Ausführungsform der erfindungsgemäßen Vorrichtung,
- Fig. 2: eine Draufsicht eines Abschnittes der ersten Ausführungsform,
- Fig. 3: eine perspektivische Detaildarstellung der ersten Ausführungsform,
- Fig. 4a: eine Tragelement der ersten Ausführungsform in Umlaufrichtung betrachtet,
- Fig. 4b: das Tragelement der ersten Ausführungsform in einer Draufsicht,
- Fig. 5: eine perspektivische Darstellung eines Abschnittes einer zweiten Ausführungsform der erfindungsgemäßen Vorrichtung,
- Fig. 6: eine Draufsicht eines Abschnittes der zweiten Ausführungsform,
- Fig. 7: eine perspektivische Detaildarstellung der zweiten Ausführungsform,
- Fig. 8: einen Abschnitt der zweiten Ausführungsform in Umlaufrichtung betrachtet,
- Fig. 9: eine perspektivische Darstellung eines Abschnittes einer dritten Ausführungsform der erfindungsgemäßen Vorrichtung,
- Fig. 10: eine Draufsicht eines Abschnittes der dritten Ausführungsform,
- Fig. 11: eine perspektivische Detaildarstellung der dritten Ausführungsform,
- Fig. 12a: ein Tragelement der dritten Ausführungsform in Umlaufrichtung betrachtet,
- Fig. 12b: das Tragelement der dritten Ausführungsform in einer Draufsicht,
- Fig. 13a: eine Quertrenneinrichtung einer der ersten oder dritten Ausführungsform in Umlaufrichtung betrachtet,
- Fig. 13b: die Quertrenneinrichtung gemäß Fig. 13a in einer Draufsicht,
- Fig. 14: eine schematische Darstellung einer erfindungsgemäßen Vereinzelungsvorrichtung in einer Seitenansicht,
- Fig. 15: eine perspektivische Darstellung einer erfindungsgemäßen Hackfruchterntemaschine,
- Fig. 16: eine perspektivische Darstellung eines Abschnittes einer vierten Ausführungsform der erfindungsgemäßen Vorrichtung,
- Fig. 17: eine Draufsicht eines Abschnittes der vierten Ausführungsform,
- Fig. 18: eine perspektivische Detaildarstellung der vierten Ausführungsform,
- Fig. 19a: eine Tragelement der vierten Ausführungsform in Umlaufrichtung betrachtet,
- Fig. 19b: das Tragelement der vierten Ausführungsform in einer Draufsicht.

Die nachfolgend erläuterten Merkmale der erfindungsgemäßen Ausführungsbeispiele können auch einzeln oder in anderen Kombinationen als dargestellt oder beschrieben Gegenstand der Erfindung sein, stets aber zumindest in Kombination mit den Merkmalen des Anspruchs 1. Sofern sinnvoll, sind funktional gleichwirkende Teile mit identischen Bezugsziffern versehen.

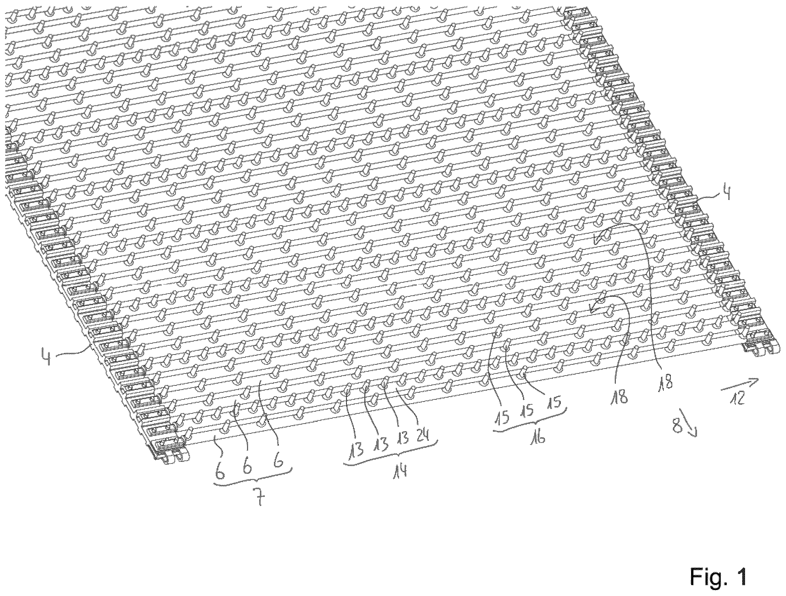

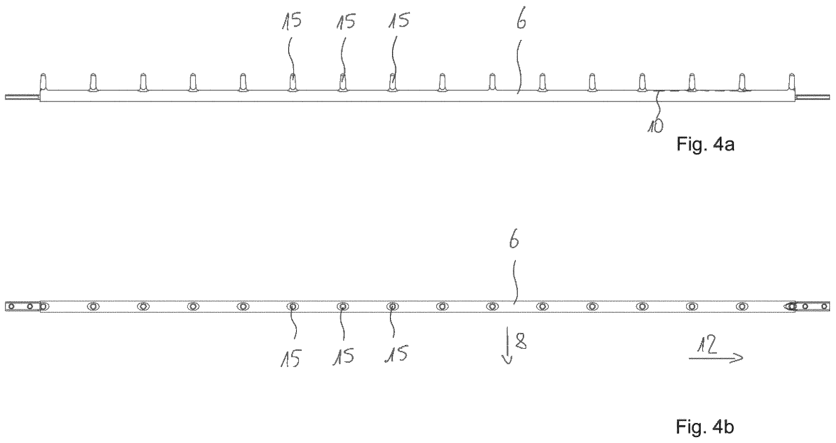

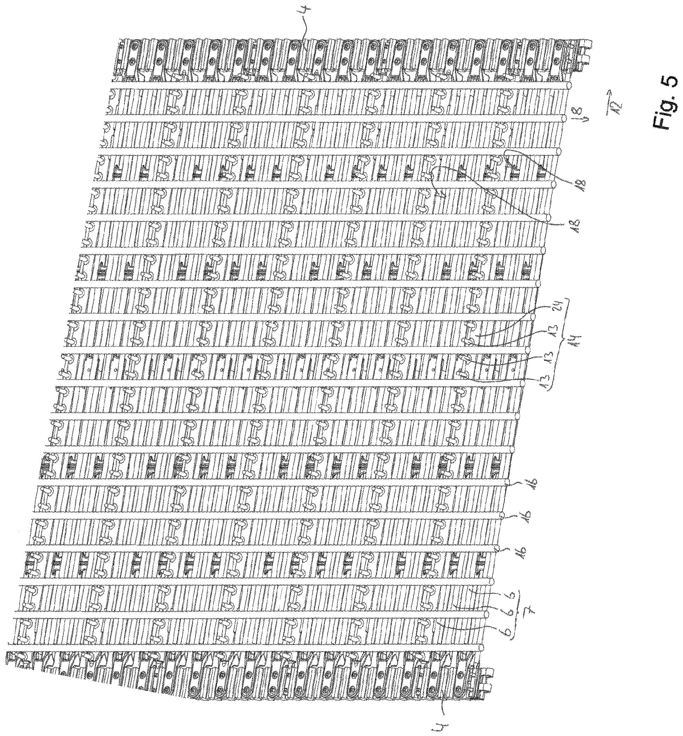

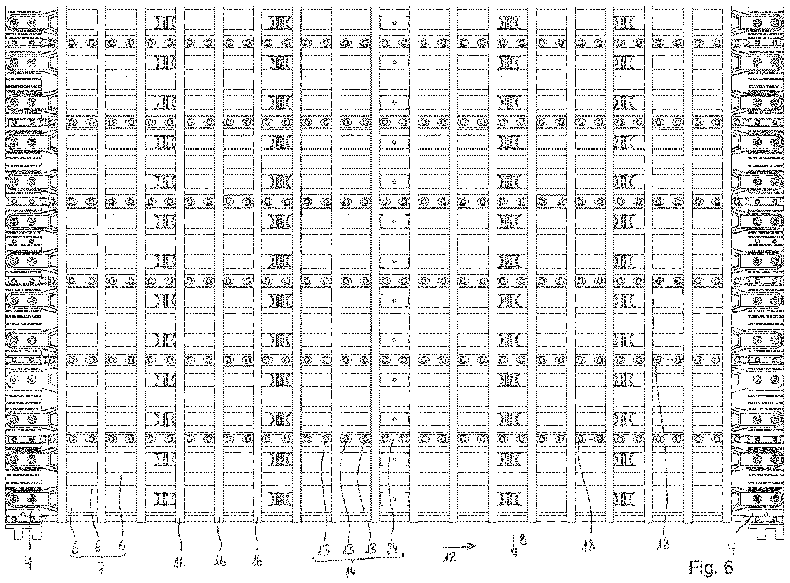

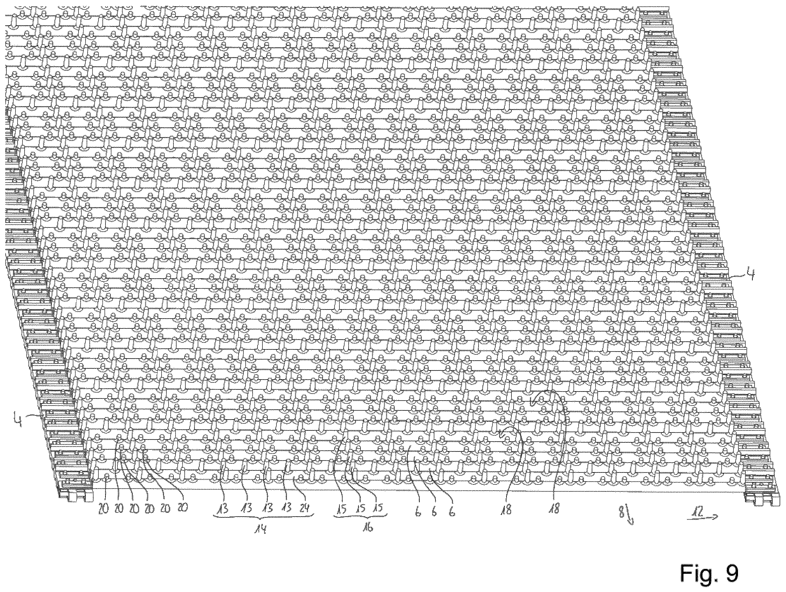

Die dargestellten Ausführungsformen der erfindungsgemäßen Vorrichtung 2 sind mehrteilige Bänder zur Förderung von Hackfrüchten. Die Fig. 1, 2, 5, 6, 9 und 10 zeigen jeweils nur einen Abschnitt der jeweiligen Ausführungsform, welcher sich im Wesentlichen eben erstreckend dargestellt ist. Das gezeigte Ende ist mit dem nicht dargestellten, gegenüberliegenden Ende zur Ausbildung eines geschlossenen, umlaufenden Bandes koppelbar. Die Ausführungsformen umfassen eine im Betrieb in eine Umlaufrichtung 8 umlaufende Tragvorrichtung 7. Diese umfasst eine Mehrzahl von als Siebstäbe ausgebildeten Tragelementen 6 (vgl. Fig. 4a, 4b, 8, 12a und 12b). Die Tragvorrichtung 7 bildet eine Mehrzahl von Aufnahmebereichen 18 mit aus, die zueinander in die Umlaufrichtung 8 und/oder in eine Querrichtung 12 versetzt angeordnet sind. Die Tragvorrichtung 7 ist zum Tragen von Hackfrüchten eingerichtet.

Die Vorrichtung 2 umfasst eine Mehrzahl von sich in die Querrichtung 12 erstreckenden Quertrenneinrichtungen 14, die in Umlaufrichtung 8 benachbarte Aufnahmebereiche 18 voneinander abgrenzen. Die Quertrenneinrichtungen 14 dienen dazu, dass ein Austreten einer innerhalb des Aufnahmebereichs 18 auf der Tragvorrichtung 7 aufliegenden Hackfrucht aus dem Aufnahmebereich 18 verhindert wird.

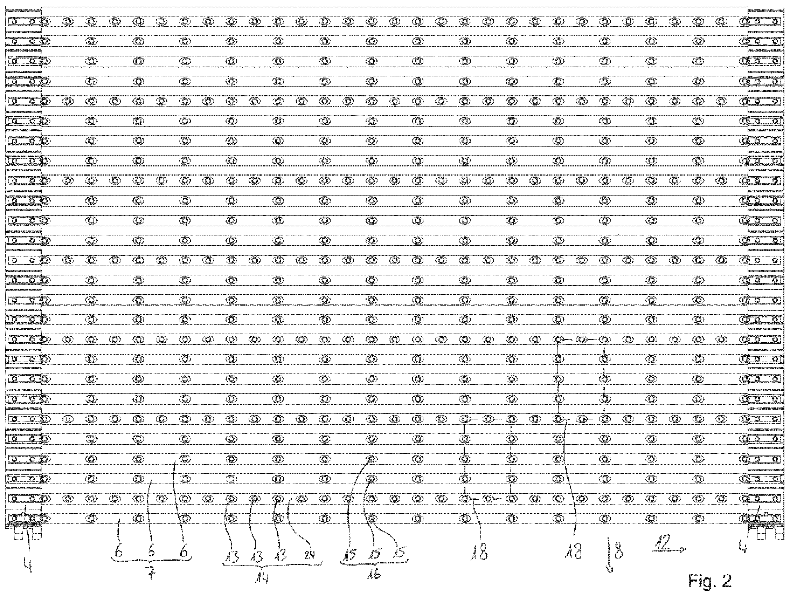

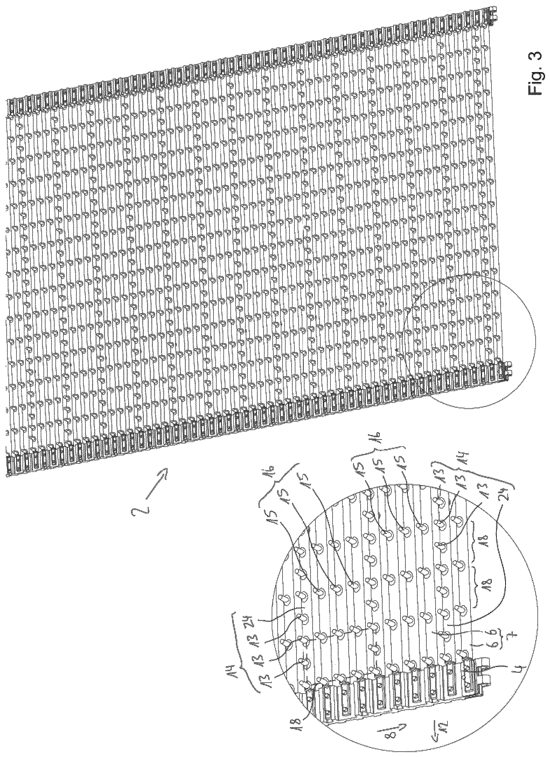

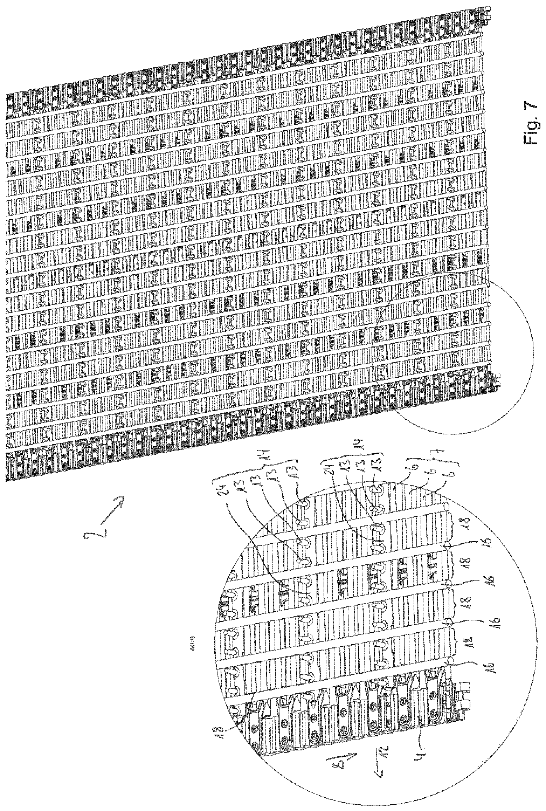

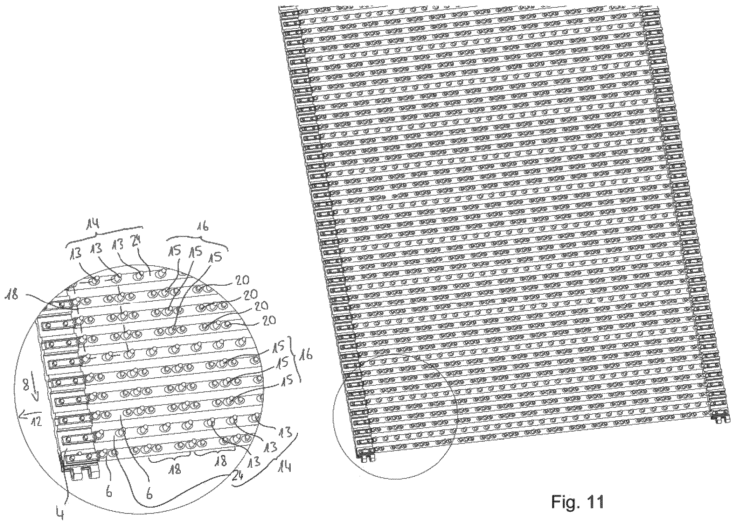

Die Aufnahmebereiche 18 grenzen von außen an einen Innenraum 11 an, der sich innerhalb einer gedachten Innenraummantelfläche 10 erstreckt. Die Innenraummantelfläche 10 erstreckt sich parallel zur Querrichtung 12 (vgl. Fig. 4a, 8 und 12a) und verläuft in einer Seitenansicht ausschließlich in Umlaufrichtung 8. Insbesondere berührt der tiefstliegende Teil der Aufnahmebereiche 18, welcher durch die Tragvorrichtung 7 ausgebildet ist, die Innenraummantelfläche 10 bzw. den Innenraum 11. Die jeweils zu den gezeigten Vorrichtungsabschnitten korrespondierenden Innenraummantelflächenabschnitte sind eben. Der Innenraum 11 der in den Fig. 1, 2, 3, 4b, 5, 6, 7, 9, 10, 11 und 12b teilweise gezeigten Vorrichtungen 2 erstreckt sich in den jeweiligen Perspektiven jeweils hauptsächlich hinter den gezeigten Tragelementen 6. In den Draufsichten gemäß Fig. 2, 6, 10 sind die Aufnahmebereiche 18 im Wesentlichen rechteckig (vgl. auch Fig. 3, 7, 11).

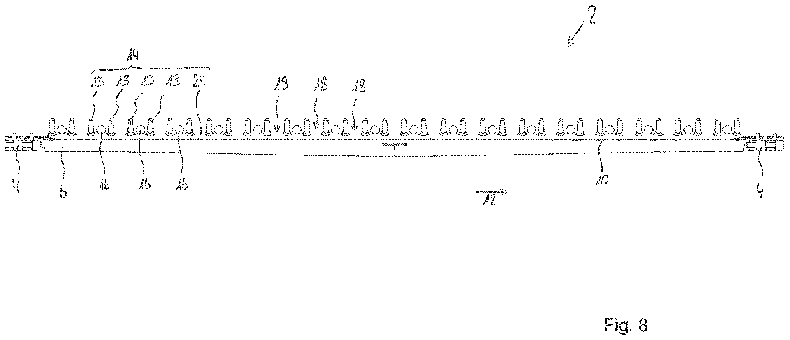

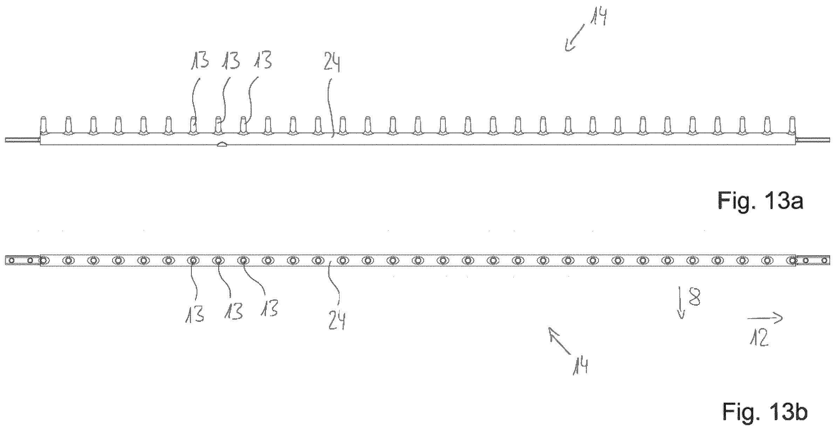

Zumindest ein abstehender Teil der Quertrenneinrichtung 14 ist in der Seitenansicht außerhalb des Innenraums 11, d.h. bei der Hackfruchtförderung oberhalb der Innenraummantelfläche 10 angeordnet. Das betrifft bei der ersten und dritten Ausführungsform die Trennelemente 13 (vgl. Fig. 13a und 13b), bei der zweiten Ausführungsform zusätzlich einen Teil des als Querstrebe ausgebildeten Quertrennelementes 24 (vgl. Fig. 8).

Zwischen zwei in Umlaufrichtung 8 benachbarten Quertrenneinrichtungen 14 sind drei (erste und dritte Ausführungsform) bzw. vier (zweite Ausführungsform) als Siebstäbe ausgebildete Tragelemente 6 angeordnet. In der zweiten Ausführungsform sind je zwei in Umlaufrichtung 8 aufeinander folgende Tragelemente 6 einstückig ausgebildet. Die Tragelemente 6 sind, wie auch die Quertrennelemente 24, seitlich an zwei Endlosträgern 4 der Vorrichtung 2 befestigt.

Die gezeigten Ausführungsformen der Vorrichtung 2 weisen eine Mehrzahl von sich in Umlaufrichtung 8, rechtwinklig zur Querrichtung 12, erstreckenden Längstrenneinrichtungen 16 auf. Diese sind außerhalb des Innenraums 11 angeordnet. Die Längstrenneinrichtungen 16 grenzen je zwei in Querrichtung 12 benachbarte Aufnahmebereiche 18 voneinander ab. Dabei laufen die Längstrenneinrichtungen 16 im Betrieb mit der Tragvorrichtung 7 um.

In der ersten und der dritten Ausführungsform der Erfindung sind sowohl die Quertrenneinrichtungen 14 als auch die Längstrenneinrichtungen 16 durch eine Mehrzahl von entlang der Querrichtung 12 bzw. entlang der Umlaufrichtung 8 aufgereihte und sich in der Seitenansicht nach außen erstreckende Trennelemente 13, 15 zumindest mitausgebildet. Die Längstrenneinrichtungen 16 sind ausschließlich durch die Trennelemente 15 ausgebildet. Die Quertrenneinrichtungen 14 sind neben den Trennelementen 13 durch parallel zu den Tragelementen 6 verlaufende Quertrennelemente 24 ausgebildet. Im Bereich von deren Enden sind die Quertrenneinrichtungen 14 an den Endlosträgern 4 angeordnet. In der zweiten Ausführungsform der Erfindung sind die Längstrenneinrichtungen 16 durch in Umlaufrichtung 8 verlaufende Riemen ausgebildet. In dieser Ausführungsform sind zwischen zwei benachbarten Längstrenneinrichtungen 16 pro Quertrenneinrichtung 14 zwei Trennelemente angeordnet, in den anderen Ausführungsformen ist zwischen zwei benachbarten Längstrenneinrichtungen 16 pro Quertrenneinrichtung 14 ein Trennelement angeordnet. Die Trennelemente haben ausgehend von dem Tragelement bzw. von dem Quertrennelement, an dem sie angeordnet sind, eine Höhe von mindestens 25 mm.

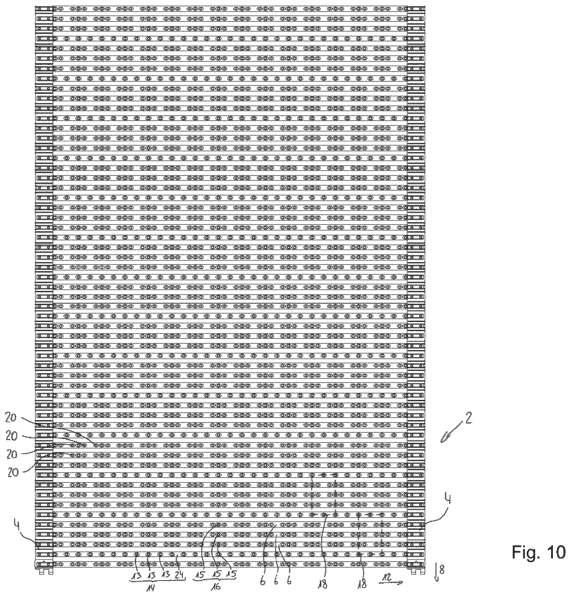

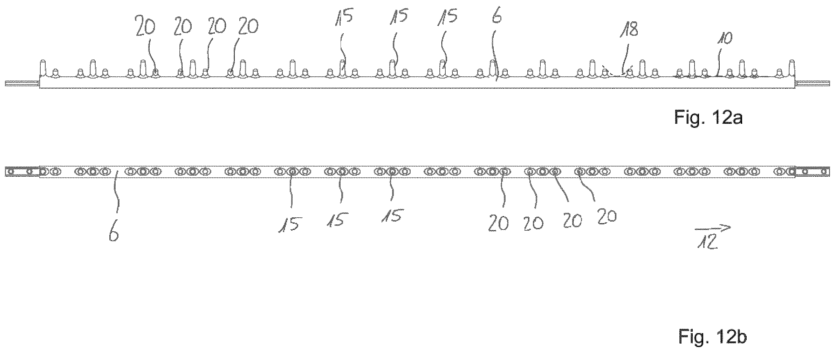

Die dritte Ausführungsform der erfindungsgemäßen Vorrichtung 2 hat wannenförmige Aufnahmebereiche 18 (vgl. insbesondere Fig. 12). Diese werden ausgebildet durch Formelemente 20, welche in der Draufsicht gemäß Fig. 10 innerhalb der Aufnahmebereiche 18 an der Tragvorrichtung 7 angeordnet sind und sich von der Innenraummantelfläche 10 nach außen erstrecken, allerdings weniger weit als die umgebenden Trennelemente. Die Formelemente sind in Umlaufrichtung betrachtet jeweils außermittig und benachbart zu beiden, die jeweiligen Aufnahmebereiche 18 begrenzenden Längstrenneinrichtungen 16 angeordnet. Insbesondere sind an jedem Tragelement 6 pro Aufnahmebereich 18 zwei Formelemente 20 angeordnet.

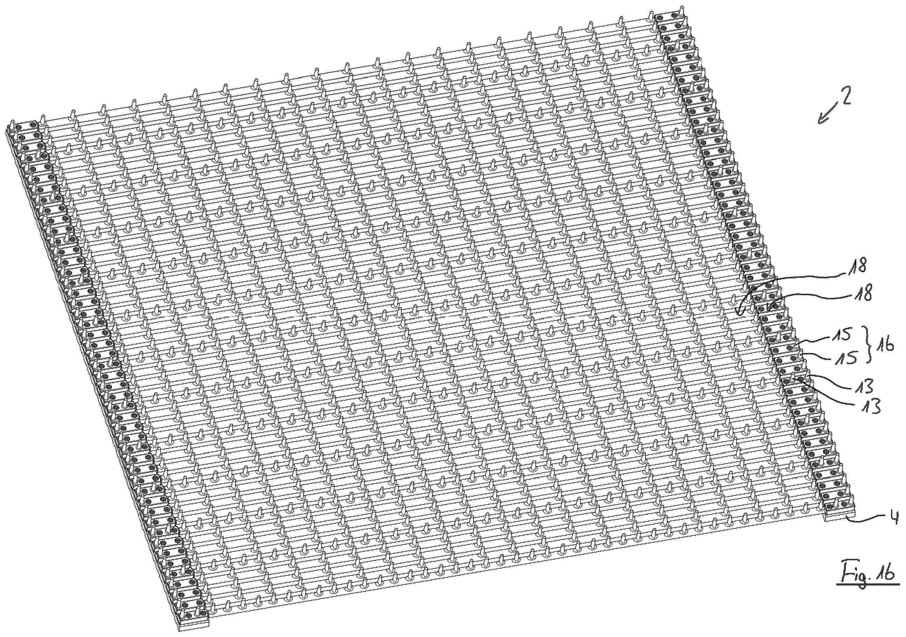

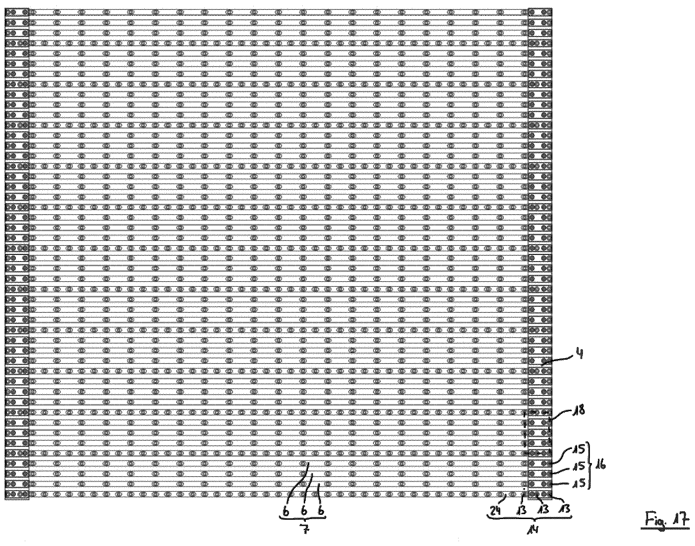

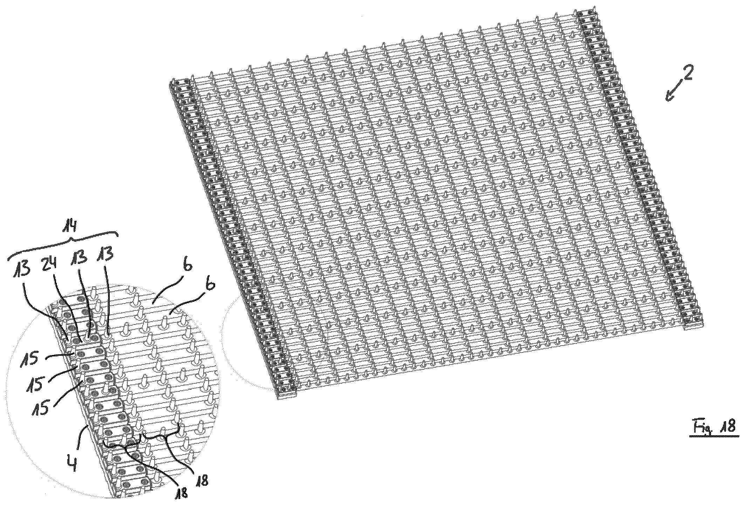

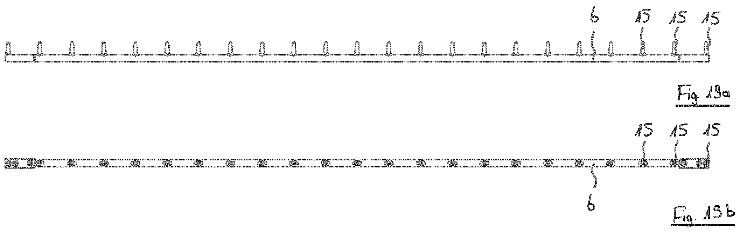

Die vierte Ausführungsform der erfindungsgemäßen Vorrichtung 2 gemäß Fig. 16 bis 18 gleicht weitgehend der ersten Ausführungsform. Im Gegensatz zur ersten Ausführungsform weist die vierte Ausführungsform Aufnahmebereiche 18 auf, die sich überwiegend oberhalb eines der Endlosträger 4 erstrecken. Zu deren Ausbildung weist die vierte Ausführungsform Trennelemente 13, 15 auch oberhalb der Endlosträger 4 auf, durch die sich die Quertrenneinrichtung 14 bis über die Endlosträger 4 erstreckt und durch die sich je eine Längstrenneinrichtung 16 vollständig über einem Endlosträger 4 und entlang eines äußeren Randes der Vorrichtung 2 erstreckt. Die Fig. 19a und 19b zeigen die dazu auch an den Enden der Tragelemente 6 angeordneten Trennelemente 15.

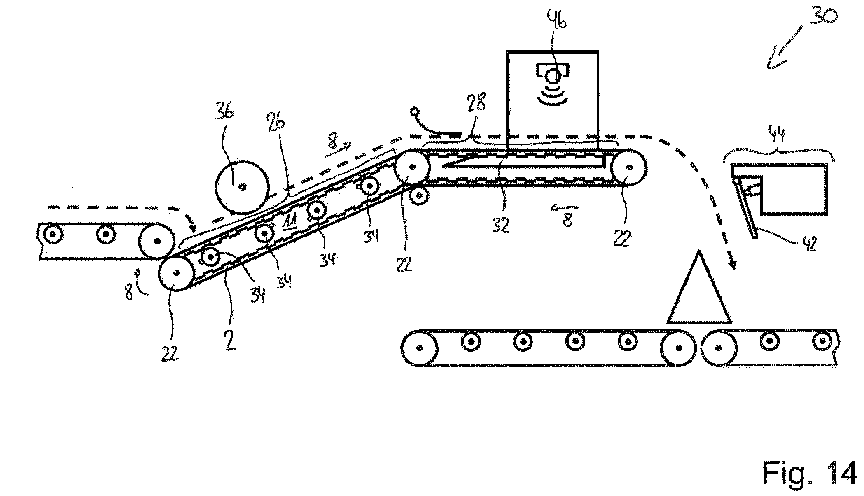

Fig. 14 zeigt eine Vereinzelungsvorrichtung 30 mit einer Vorrichtung 2. Die Vereinzelungsvorrichtung 30 hat einen starren, im Betrieb nicht mit der Vorrichtung umlaufenden und nicht dargestellten Vorrichtungsrahmen und eine Mehrzahl von Umlenkelementen 22 zur Führung der Vorrichtung 2. Die Vereinzelungsvorrichtung 30 bildet einen ersten Förderabschnitt 26 und einen zweiten Förderabschnitt 28 aus. Im ersten Förderabschnitt 26 weist die Vorrichtung 2 eine Steigung auf, wohingegen der sich in Umlaufrichtung 8 anschließende, zweite Förderabschnitt 28 horizontal verläuft. Unterhalb des zweiten Förderabschnitts 28 ist zumindest ein Gleitelement 32 angeordnet, auf dem die Vorrichtung 2 im zweiten Förderabschnitt 28 gleitet. Unterhalb des ersten Förderabschnitts 26 ist zumindest ein im Betrieb rotierendes Stoßelement 34 angeordnet, welches zur Erzeugung von Stößen auf die Vorrichtung 2 im ersten Förderabschnitt ausgebildet ist. Sowohl das Gleitelement 32 als auch die Stoßelemente 34 sind innerhalb des Innenraumes 11 angeordnet. Oberhalb des ersten Förderabschnitts 26 ist ein im Betrieb drehbares Abstreifelement 36 angeordnet, das im Betrieb elastisch nachgiebig ausgebildet ist. An einer in Gutstromrichtung auf die Vorrichtung 2 folgenden Fallstufe für die Hackfrüchte ist insbesondere ein Trenngerät 44 angeordnet, das in Querrichtung 12 aufgereihte und einzeln ansteuerbare Ablenkelemente 42 aufweist, deren Anzahl zumindest der Anzahl von in Querrichtung 12 nebeneinander angeordneten Aufnahmebereichen 18 entspricht. Die Ablenkelemente 42 werden in Abhängigkeit von den Informationen eines über dem zweiten Förderabschnitt 28 angeordneten optischen Sensors 46 angesteuert, der abzulenkende Hackfrüchte bzw. Fremdkörper optisch erkennt.

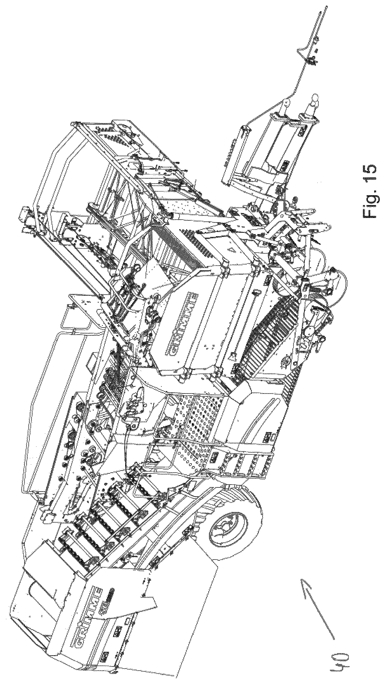

Fig. 15 zeigt eine mobile Hackfruchterntemaschine 40 mit einer vorbeschriebenen Vereinzelungsvorrichtung 30.

## Patentansprüche

1. Vorrichtung (2) zur Förderung von Hackfrüchten, die als Siebband zur Trennung von Beimengungen von den Hackfrüchten während der Förderung ausgebildet ist, umfassend eine im Betrieb in eine Umlaufrichtung (8) umlaufende Tragvorrichtung (7), die aus einer Mehrzahl insbesondere starrer und relativ zueinander beweglicher Tragelemente (6) zumindest mitausgebildet ist, die zumindest einen Aufnahmebereich (18) mit ausbildet und zum Tragen der Hackfrüchte eingerichtet ist, und zumindest eine sich zumindest anteilig in eine Querrichtung (12) erstreckende Quertrenneinrichtung (14), die den Aufnahmebereich (18) in Umlaufrichtung (8) begrenzt, wobei der Aufnahmebereich (18) von außen an einen Innenraum (11) angrenzt, der von einer sich parallel zur Querrichtung (12) erstreckenden und in einer Seitenansicht ausschließlich in Umlaufrichtung (8) verlaufenden Innenraummantelfläche (10) umgrenzt ist, und zumindest ein abstehender Teil der Quertrenneinrichtung (14) in der Seitenansicht außerhalb des Innenraumes (11) angeordnet ist, wobei die Vorrichtung zumindest eine sich angewinkelt, insbesondere rechtwinklig, zur Erstreckungsrichtung der Quertrenneinrichtung (14) und parallel zur Innenraummantelfläche (10) erstreckende Längstrenneinrichtung (16) umfasst, wovon zumindest ein abstehender Teil in der Seitenansicht außerhalb des Innenraumes (11) angeordnet ist und welche zwei in Querrichtung (12) benachbarte Aufnahmebereiche (18) voneinander abgrenzt, wobei die zumindest eine Quertrenneinrichtung (14) und/oder die zumindest eine Längstrenneinrichtung (16) durch eine Mehrzahl von entlang der Querrichtung (12) bzw. entlang der zur Querrichtung (12) angewinkelten Richtung aufgereihten und sich in der Seitenansicht nach außen erstreckenden Trennelementen (13,15) zumindest mitausgebildet ist, **dadurch gekennzeichnet, dass** die Tragvorrichtung (7) eine Mehrzahl von in die Querrichtung (12) länglich verlaufenden Siebstäben aufweist, die in die Umlaufrichtung (8) benachbart und parallel zueinander angeordnet sind und mit ihren Enden an seitlichen Endlosträgern (4) angeordnet sind, welche zum Überlaufen von Umlenkrollen ausgebildet sind und im Betrieb antreibbar sind.

2. Vorrichtung nach Anspruch 1, **dadurch gekennzeichnet, dass** der Aufnahmebereich (18) zumindest abschnittsweise wannen- oder muldenförmig ausgebildet ist.

3. Vorrichtung nach einem der vorhergehenden Ansprüche, **dadurch gekennzeichnet, dass** die zumindest eine Längstrenneinrichtung (16) derart ausgebildet ist, dass sie im Betrieb mit der Tragvorrichtung (7) umläuft.

4. Vorrichtung nach einem der vorhergehenden Ansprüche, **dadurch gekennzeichnet, dass** die Trennelemente (13,15) sich um mindestens 15 mm, bevorzugt um mindestens 20 mm, besonders bevorzugt um mindestens 25 mm in eine zur Innenraummantelfläche (10) rechtwinklige Richtung und insbesondere von der Innenraummantelfläche (10) erstrecken.

5. Vorrichtung nach einem der vorhergehenden Ansprüche, **dadurch gekennzeichnet, dass** die Quertrenneinrichtung (14) ein sich in die Querrichtung länglich erstreckendes Quertrennelement (24) aufweist, das sich zumindest abschnittsweise außerhalb des Innenraumes (11) erstreckt und/oder an dem Trennelemente (13,15) angeordnet sind.

6. Vorrichtung nach einem der vorhergehenden Ansprüche, **dadurch gekennzeichnet, dass** die Längstrenneinrichtung (16) ein mehrere, in Umlaufrichtung (12) benachbarte Aufnahmebereiche (18) abgrenzendes Längstrennelement (15) umfasst.

7. Vorrichtung nach einem der vorhergehenden Ansprüche, **dadurch gekennzeichnet, dass** der Aufnahmebereich (18) durch zumindest ein sich von der Innenraummantelfläche (10) nach außen erstreckendes Formelement (20) mitausgebildet wird, das sich rechtwinklig zur Innenraummantelfläche (18) weniger weit erstreckt als die Quertrenneinrichtung (14) und/oder die Längstrenneinrichtung (16).

8. Vorrichtung nach Anspruch 7, **dadurch gekennzeichnet, dass** das Formelement (20) in Umlaufrichtung (8) betrachtet außermittig zwischen zwei in Querrichtung (12) benachbarten Längstrenneinrichtungen (16) angeordnet ist.

9. Vorrichtung nach einem der vorhergehenden Ansprüche, **dadurch gekennzeichnet, dass** die Tragvorrichtung (7) aus einer Mehrzahl insbesondere starrer und relativ zueinander beweglicher Tragelemente (6) zumindest mitausgebildet ist.

10. Vorrichtung nach Anspruch 9, **gekennzeichnet durch** zumindest zwei sich in die Umlaufrichtung (8), insbesondere parallel zueinander, erstreckende Endlosträger (4), an denen die Tragelemente (6) befestigt sind, wobei sich die Quertrenneinrichtung (14) und/oder die Längstrenneinrichtung (16) zumindest teilweise derart im Bereich zumindest eines der Endlosträger (4) erstrecken/erstreckt, als eine zur Innenraummantelfläche (10) rechtwinklige Hilfsgerade sowohl den Endlosträger (4) als auch die Quertrenneinrichtung (14) bzw. die Längstrenneinrichtung (16) schneidet.

11. Vorrichtung nach Anspruch 10 unter Einschluss von Anspruch 4, **dadurch gekennzeichnet, dass** die Hilfsgerade sowohl den Endlosträger (4) als auch zumindest ein Trennelement (13,15) und insbesondere zumindest ein Tragelement (6) und/oder zumindest ein Quertrennelement (24) schneidet.

12. Vereinzelungsvorrichtung (30) umfassend eine Vorrichtung (2) nach einem der vorhergehenden Ansprüche, einen Vorrichtungsrahmen und zumindest zwei daran angeordnete Umlenkelemente (22), durch die die Vorrichtung (2) derart gelagert ist, dass zumindest ein Förderabschnitt (26) der Vorrichtung zumindest abschnittsweise eine Steigung oder ein Gefälle aufweist.

13. Vereinzelungsvorrichtung nach Anspruch 12, **dadurch gekennzeichnet, dass** ein erster Förderabschnitt (26) der Vorrichtung eine größere Steigung bzw. ein größeres Gefälle aufweist als ein sich in Umlaufrichtung (8) anschließender, zweiter Förderabschnitt (28).

14. Vereinzelungsvorrichtung nach Anspruch 12 oder 13, **gekennzeichnet durch** zumindest ein im Betrieb nicht-umlaufendes, unterhalb zumindest eines Teils des Förderabschnittes bzw. des zweiten Förderabschnittes (28) angeordnetes Gleitelement (32) zur Führung der Vorrichtung (2).

15. Vereinzelungsvorrichtung nach einem der Ansprüche 12 bis 14, **gekennzeichnet durch** zumindest ein im Betrieb insbesondere rotierendes, bewegliches Stoßelement (34), welches zur Erzeugung von Stößen auf zumindest einen Teil des Förderabschnittes (24) bzw. des ersten Förderabschnittes (24) ausgebildet ist.

16. Vereinzelungsvorrichtung nach einem der Ansprüche 12 bis 15, **gekennzeichnet durch** zumindest ein oberhalb des Förderabschnittes (26) bzw. des ersten Förderabschnittes (26) angeordnetes und drehbar gelagertes Abstreifelement (36).

17. Mobile Hackfruchterntemaschine (40) mit einer Vereinzelungsvorrichtung (30) nach einem der Ansprüche 12 bis 16.

## Claims

1. An apparatus (2) for conveying root crops, which is configured as a screening belt for separating admixtures from the root crops during conveying, comprising a carrying device (7) which circulates in a circulation direction (8) during operation and is at least partly formed by a plurality of in particular rigid carrying elements (6) which are movable relative to one another, partly forms at least one receiving region (18) and is configured to carry the root crops, and at least one transverse separating device (14) which extends at least partially in a transverse direction (12) and delimits the receiving region (18) in the circulation direction (8), wherein the receiving region (18) from the outside adjoins an interior space (11) which is bordered by an interior space surface (10) extending parallel to the transverse direction (12) and, in side view, running exclusively in the circulation direction (8) and at least one protruding part of the transverse separating device (14) is arranged, in side view, outside the interior space (11), wherein the apparatus comprises at least one longitudinal separating device (16) which extends at an angle, in particular at right angles, to the extent direction of the transverse separating device (14) and parallel to the interior space surface (10), of which at least one protruding part is arranged, in side view, outside the interior space (11) and which delimits two receiving regions (18) adjacent to one another in the transverse direction (12), wherein the at least one transverse separating device (14) and/or the at least one longitudinal separating device (16) is at least partly formed by a plurality of separating elements (13, 15), which are arranged in a row along the transverse direction (12) or along a direction at an angle to the transverse direction (12) and extend towards the outside in side view, **characterized in that** the carrying device (7) has a plurality of screening bars which run linearly in the transverse direction (12) and are arranged adjacent and parallel to one another in the circulation direction (8) and are arranged with their ends on lateral endless carriers (4), which are configured to run over deflecting rollers and may be driven during operation.

2. The apparatus as claimed in claim **1, characterized in that** the receiving region (18) is formed at least partially as a trough or dish.

3. The apparatus as claimed in any of the preceding claims, **characterized in that** the at least one longitudinal separating device (16) is configured such that it circulates with the carrying device (7) in operation.

4. The apparatus as claimed in any of the preceding claims **4, characterized in that** the separating elements (13, 15) extend by at least 15 **mm,** preferably by at least 20 **mm,** particularly preferably by at least 25 mm in a direction at right angles to the interior space surface (10) and in particular away from the interior space surface (10).

5. The apparatus as claimed in any of the preceding claims, **characterized in that** the transverse separating device (14) has a transverse separating element (24) which extends linearly in the transverse direction and at least partially outside the interior (11) and/or is arranged on the separating elements (13, 15).

6. The apparatus as claimed in any of the preceding claims, **characterized in that** the longitudinal separating device (16) comprises a longitudinal separating element (15) delimiting several receiving regions (18) which are adjacent in the circulation direction (12).

7. The apparatus as claimed in any of the preceding claims, **characterized in that** the receiving region (18) is partly formed by at least one forming element (20) which extends outward from the interior space surface (10), and does not extend as far at right angles to the interior space surface (10) as the transverse separating device (14) and/or the longitudinal separating device (16).

8. The apparatus as claimed in claim **7, characterized in that**, viewed in the circulation direction (8), the forming element (20) is arranged eccentrically between two longitudinal separating devices (16) which are adjacent in the transverse direction (12).

9. The apparatus as claimed in any of the preceding claims, **characterized in that** the carrying device (7) is at least partly formed by a plurality of in particular rigid carrying elements (6) which are movable relative to one another.

10. The apparatus as claimed in claim **9, characterized by** at least two endless carriers (4) which extend in the circulation direction (8), in particular parallel to one another, and on which the carrying elements (6) are attached, wherein the transverse separating device (14) and/or the longitudinal separating device (16) extends at least partially in the region of at least one of the endless carriers (4), such that a theoretical straight line at right angles to the interior space surface (10) intersects both the endless carrier (4) and also the transverse separating device (14) or the longitudinal separating device (16).

11. The apparatus as claimed in claim 10 with the inclusion of claim 4, **characterized in that** the theoretical straight line intersects both the endless carrier (4) and also at least one separating element (13, 15), and in particular at least one carrying element (6) and/or at least one transverse separating element (24).

12. A separating apparatus (30) comprising an apparatus (2) as claimed in any of the preceding claims, an apparatus frame and at least two deflecting elements (22) arranged thereon, which mount the apparatus (2) such that at least one conveying portion (26) of the apparatus at least partially has an upward or downward slope.

13. The separating apparatus as claimed in claim 12, **characterized in that** a first conveying portion (26) of the apparatus has a steeper upward or downward slope than a second conveying portion (28) which is adjacent thereto in the circulation direction (8).

14. The separating apparatus as claimed in claim 12 or 13, **characterized by** at least one slide element (32), which does not circulate in operation and is arranged below at least a part of the conveying portion or the second conveying portion (28), for guiding the apparatus (2).

15. The separating apparatus as claimed in any of claims 12 to 14, **characterized by** at least one movable impact element (34), in particular rotating during operation, which is configured to generate impacts on at least a part of the conveying portion (24) or the first conveying portion (24).

16. The separating apparatus as claimed in any of claims 12 to 15, **characterized by** at least one rotatably mounted scraper element (36) which is arranged above the conveying portion (26) or the first conveying portion (26).

17. A mobile root crop harvesting machine (40) with a separating apparatus (30) as claimed in any of claims 12 to 16.

## Revendications

1. Dispositif (2) pour le transport de plantes racines, qui est réalisé sous forme de bande de tamisage pour la séparation d'impuretés des plantes racines pendant le transport, comprenant un dispositif de support (7) circulant en fonctionnement dans une direction de circulation (8), qui est au moins co-réalisé à partir d'une pluralité d'éléments de support (6) notamment rigides et mobiles les uns par rapport aux autres, qui co-réalise au moins une zone de réception (18) et qui est adapté pour le support des plantes racines, et au moins un dispositif de séparation transversal (14) s'étendant au moins partiellement dans une direction transversale (12), qui délimite la zone de réception (18) dans la direction de circulation (8), la zone de réception (18) étant adjacente de l'extérieur à un espace intérieur (11) qui est délimité par une surface d'enveloppe **d'espace** intérieur (10) s'étendant parallèlement à la direction transversale (12) et, dans une vue latérale, exclusivement dans la direction de circulation (8), et au moins une partie en saillie du dispositif de séparation transversal (14) étant agencée, dans la vue latérale, à l'extérieur de l'espace intérieur (11), le dispositif comprenant au moins un dispositif de séparation longitudinal (16) s'étendant en angle, notamment à angle droit, par rapport à la direction d'extension du dispositif de séparation transversal (14) et parallèlement à la surface d'enveloppe d'espace intérieur (10), dont au moins une partie en saillie est agencée, dans la vue latérale, à l'extérieur de l'espace intérieur (11) et qui délimite l'une de l'autre deux zones de réception (18) voisines dans la direction transversale (12), l'au moins un dispositif de séparation transversal (14) et/ou l'au moins un dispositif de séparation longitudinal (16) étant au moins co-réalisés par une pluralité d'éléments de séparation (13, 15) alignés le long de la direction transversale (12) ou le long de la direction en angle par rapport à la direction transversale (12) et s'étendant vers l'extérieur dans la vue latérale, **caractérisé en ce que** le dispositif de support (7) présente une pluralité de barres de tamisage s'étendant longitudinalement dans la direction transversale (12), qui sont agencées de manière voisine et parallèle les unes aux autres dans la direction de circulation (8) et sont agencées avec leurs extrémités sur des supports sans fin (4) latéraux, qui sont réalisés pour le franchissement de rouleaux de renvoi et peuvent être entraînés en fonctionnement.

2. Dispositif selon la revendication 1, **caractérisé en ce que** la zone de réception (18) est réalisée au moins par sections en forme de cuvette ou d'auge.

3. Dispositif selon l'une quelconque des revendications précédentes, **caractérisé en ce que** l'au moins un dispositif de séparation longitudinal (16) est réalisé de manière à circuler avec le dispositif de support (7) en fonctionnement.

4. Dispositif selon l'une quelconque des revendications précédentes, **caractérisé en ce que** les éléments de séparation (13, 15) s'étendent d'au moins 15 mm, de préférence d'au moins 20 mm, de manière particulièrement préférée d'au moins 25 mm dans une direction à angle droit de la surface d'enveloppe **d'espace** intérieur (10) et notamment à partir de la surface d'enveloppe d'espace intérieur (10).

5. Dispositif selon l'une quelconque des revendications précédentes, **caractérisé en ce que** le dispositif de séparation transversal (14) présente un élément de séparation transversal (24) s'étendant longitudinalement dans la direction transversale, qui s'étend au moins par sections à l'extérieur de l'espace intérieur (11) et/ou sur lequel sont agencés des éléments de séparation (13, 15).

6. Dispositif selon l'une quelconque des revendications précédentes, **caractérisé en ce que** le dispositif de séparation longitudinal (16) comprend un élément de séparation longitudinal (15) délimitant plusieurs zones de réception (18) voisines dans la direction de circulation (12).

7. Dispositif selon l'une quelconque des revendications précédentes, **caractérisé en ce que** la zone de réception (18) est co-réalisée par au moins un élément de forme (20) s'étendant vers l'extérieur depuis la surface d'enveloppe d'espace intérieur (10), qui s'étend à angle droit de la surface d'enveloppe d'espace intérieur (18) moins loin que le dispositif de séparation transversal (14) et/ou le dispositif de séparation longitudinal (16).

8. Dispositif selon la revendication 7, **caractérisé en ce que** l'élément de forme (20), considéré dans la direction de circulation (8), est agencé de manière excentrée entre deux dispositifs de séparation longitudinaux (16) voisins dans la direction transversale (12).

9. Dispositif selon l'une quelconque des revendications précédentes, **caractérisé en ce que** le dispositif de support (7) est au moins co-réalisé à partir d'une pluralité d'éléments de support (6), notamment rigides et mobiles les uns par rapport aux autres.

10. Dispositif selon la revendication 9, **caractérisé par** au moins deux supports sans fin (4) s'étendant dans la direction de circulation (8), notamment parallèlement l'un à l'autre, sur lesquels sont fixés les éléments de support (6), le dispositif de séparation transversal (14) et/ou le dispositif de séparation longitudinal (16) s'étendant au moins partiellement dans la zone d'au moins l'un des supports sans fin (4) de telle sorte qu'une droite auxiliaire à angle droit de la surface d'enveloppe d'espace intérieur (10) coupe aussi bien le support sans fin (4) que le dispositif de séparation transversal (14) ou le dispositif de séparation longitudinal (16).

11. Dispositif selon la revendication 10, y compris la revendication 4, **caractérisé en ce que** la droite auxiliaire coupe à la fois le support sans fin (4) et au moins un élément de séparation (13, 15) et notamment au moins un élément de support (6) et/ou au moins un élément de séparation transversal (24).

12. Dispositif d'individualisation (30) comprenant un dispositif (2) selon l'une quelconque des revendications précédentes, un cadre de dispositif et au moins deux éléments de renvoi (22) agencés sur celui-ci, par lesquels le dispositif (2) est monté de telle sorte qu'au moins une section de transport (26) du dispositif présente au moins par sections une pente ou une descente.

13. Dispositif d'individualisation selon la revendication 12, **caractérisé en ce qu'**une première section de transport (26) du dispositif présente une plus grande pente ou une plus grande descente qu'une deuxième section de transport (28) qui s'y raccorde dans la direction de circulation (8).

14. Dispositif d'individualisation selon la revendication 12 ou 13, **caractérisé par** au moins un élément de glissement (32) ne circulant pas en fonctionnement, agencé en dessous d'au moins une partie de la section de transport ou de la deuxième section de transport (28), pour le guidage du dispositif (2).

15. Dispositif d'individualisation selon l'une quelconque des revendications 12 à 14, **caractérisé par** au moins un élément de poussée (34) mobile, notamment rotatif en fonctionnement, qui est réalisé pour générer des chocs sur au moins une partie de la section de transport (24) ou de la première section de transport (24).

16. Dispositif d'individualisation selon l'une quelconque des revendications 12 à 15, **caractérisé par** au moins un élément de raclage (36) agencé au-dessus de la section de transport (26) ou de la première section de transport (26) et monté rotatif.

17. Récolteuse mobile de plantes racines (40) avec un dispositif d'individualisation (30) selon l'une quelconque des revendications 12 à 16.
